# EUROPEAN PATENT APPLICATION

(11) **EP 4 170 789 A1**
(43) Date of publication of application: **26.04.2023**
(21) Application number: 21203348.4
(22) Date of filing: 19.10.2021
(51) Int. Cl.: H01M 50/213, H01M 50/249, H01M 50/50, H01M 50/502

(54) **A BATTERY MODULE, A BATTERY PACK, AN ELECTRIC VEHICLE, A CELL CARRIER, A CELL ASSEMBLY**

(71) Applicant: Samsung SDI Co., Ltd., Yongin-si, Gyeonggi-do 17084 (KR)
(72) Inventor: Pucher, Matthias, 8403 Lebring (AT); Hadler, Bernhard, 8073 Feldkirchen/Graz (AT); Ridisser, Markus, 8141 Premstätten (AT)
(74) Representative: Gulde & Partner

(57) **Abstract**

The present disclosure refers to a battery module (12), comprising: a plurality of battery cells (20), and at least two cell carriers (30); wherein the at least two cell carriers (30) are arranged adjacent to each other, and each of the cell carriers (30) comprises a first plurality of cell retainers (31) and a second plurality of cell retainers (32), wherein each of the cell retainers (31, 32) is adapted for holding one of the battery cells (20) in a form locking manner; wherein the plurality of battery cells (20) is arranged in the cell retainers (31, 32); wherein each of the cell carriers (30) comprises at least two meandering ribs (33a, 33b) being spaced apart from each other; and wherein the first plurality of cell retainers (31) of one of the cell carriers (30) is arranged between the at least two meandering ribs (33a, 33b) of the cell carrier (30), and the second plurality of cell retainers (32) of the cell carrier (30) is arranged between one of the at least two meandering ribs (33a, 33b) and a meandering rib (33a, 33b) of an adjacently arranged cell carrier (30).

## Description

### Field of the Disclosure

The present disclosure relates to a battery module for an electric vehicle. The present disclosure also relates to a battery pack comprising the battery module, an electric vehicle comprising the battery pack, a cell carrier, and a cell assembly.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery system requires appropriate mechanical connections between the individual components, e.g. between battery cells, the BMS, and the housing. These connections must remain functional and save during the average service life of the battery system. Further, installation space and interchangeability requirements must be met, especially in mobile applications.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

In current battery modules and/or battery packs cylindrical cells are fixed with either a top and a bottom plastic carrier. Another version is to use an expandable adhesive to hold the cells. Both assemblies need rather large subassemblies and mostly they are not modular. Comparably large subassemblies are difficult to handle during manufacturing and large manufacturing areas are needed, e.g., to perform laser welding to connect battery cells and a current collector structure with each other. Such an assembly is disclosed in CN 202352739 U. Therein, a two-part battery carrier is made of insulating and flame-retardant materials and comprises two plates. The plates are arranged on top of and below the battery cells and comprise dovetail connectors to be fixed to adjacent plates.

DE 10 2011 015621 A1 discloses a battery for a motor vehicle with battery cells and plastic holder elements holding the battery cells in a housing of the battery. The cylindrical battery cells and the plastic holder elements are arranged in a form locking manner. The holding element is designed as a magazine which is fastened in a housing and by means of which a plurality of battery cells is held in the housing. Battery cells are held by elastic walls of the magazine, wherein the plastic holder comprises one pair of walls for holding a single battery. The battery cell is inserted into the magazine, so that the walls move apart by elastic deformation and the battery cell is snapped into its position. Within one of said holders, the battery cells are arranged in two straight rows. A straight rib extends between the two rows and the walls that confine the battery cells are formed by projections of said rib.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery module comprises: a plurality of battery cells, and at least two cell carriers; wherein the at least two cell carriers are arranged adjacent to each other, and each of the cell carriers comprises a first plurality of cell retainers and a second plurality of cell retainers, wherein each of the cell retainers is adapted for holding one of the battery cells in a form locking manner; wherein the plurality of battery cells is arranged in the cell retainers; wherein each of the cell carriers comprises at least two meandering ribs being spaced apart from each other; and wherein the first plurality of cell retainers of one of the cell carriers is arranged between the at least two meandering ribs of said cell carrier, and the second plurality of cell retainers of said cell carrier is arranged between one of the at least two meandering ribs and a meandering rib of an adjacently arranged cell carrier.

According to another aspect of the present disclosure, a battery pack is provided, comprising a plurality of battery modules as described above.

Yet another aspect of the present disclosure refers to an electric vehicle comprising at least one battery module as described above and/or at least one battery pack as described above.

Yet another aspect of the present disclosure refers to a cell carrier, comprising: a first plurality of cell retainers and a second plurality of cell retainers, wherein each of the cell retainers is adapted for holding a battery cell in a form locking manner; at least two meandering ribs being spaced apart from each other; wherein the first plurality of cell retainers the cell carrier is arranged between the at least two meandering ribs of said cell carrier, and the second plurality of cell retainers of said cell carrier is arranged oppositely to the first plurality of cell retainers and separated therefrom by one of the at least two meandering ribs.

Yet another aspect of the present disclosure refers to a cell assembly, comprising: the cell carrier; a plurality of battery cells; and a busbar; wherein the plurality of battery cells is arranged in the cell retainers; and the plurality of cells is electrically interconnected by the busbar.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of an electric vehicle according to an embodiment of the invention.
- Fig. 2: illustrates a perspective view of a cell carrier according to an embodiment of the invention.
- Fig. 3: illustrates a perspective view of a cell carrier and a plurality of battery cells according to an embodiment of the invention.
- Fig. 4: illustrates a perspective view of a cell assembly according to an embodiment of the invention.
- Fig. 5: illustrates a perspective view of a battery module according to an embodiment of the invention.
- Fig. 6: illustrates a perspective view of a battery pack according to an embodiment of the invention.
- Fig. 7: illustrates a schematic top view of a plurality of adjacently arranged cell carriers according to an embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted.

### General Concept

According to one aspect of the present disclosure, a battery module comprises: a plurality of battery cells, and at least two cell carriers. The at least two cell carriers are arranged adjacent to each other, i.e., side-by-side. The battery module can comprise any number of cell carriers to retain a desired amount of battery cells. Each of the cell carriers comprises a first plurality of cell retainers and a second plurality of cell retainers. Therein, the first plurality of cell retainers and the second plurality of cell retainers are distinguishable from each other by their arrangement. The first plurality of cell retainers is arranged in a first row and the second plurality of cell retainers is arranged in a second row, wherein the first and second row are separated by a rib. The first plurality of cell retainers and the second plurality of cell retainers are also referred to as cell retainers. Each of the cell retainers is adapted for holding one of the battery cells in a form locking manner. I.e., the cell retainers and the battery cells having a shape that match in the sense that the battery cells are retainable in a fixed manner in the cell retainers. The plurality of battery cells is arranged in the cell retainers.

Each of the cell carriers comprises at least two meandering ribs being spaced apart from each other. In other words, the at least two ribs have a meandering shape which can also be called an undulating shape, i.e., each of the ribs basically extends in a principal extension plane of the respective rib, wherein the meandering, i.e., undulating, rib alternatingly extends to either of the two opposite sides with respect the principal extension plane. The first plurality of cell retainers of one of the cell carriers is arranged between the at least two meandering ribs of said cell carrier. The second plurality of cell retainers of said cell carrier is arranged between one of the at least two meandering ribs and a meandering rib of an adjacently arranged cell carrier. I.e., the second plurality of cell retainers is separated from the first plurality of cell retainers by either the first meandering rib or the second meandering rib.

In other words, the battery module can be built modular by virtue of the cell carriers that are arranged adjacent to each other. Each of the cell carriers and the plurality of battery cells form a sub-module. Therefore, only small sub-modules need to be manufactured and accordingly arranged to manufactured the entire battery module. These sub-modules are efficient to handle and only small manufacturing sites are needed. The sub-modules are modular in size, easy to handle and thus assembling tolerances can be reduced compared to the case that all the battery cells of the entire battery module need to be equipped with a current collector structure in the same manufacturing site, e.g., by laser welding. The modular design enables that a smaller number of battery cells corresponding to the number of battery cells in a cell carrier can be electrically interconnected by a current collector structure, e.g., a busbar. A plurality of cell carriers can be arranged adjacent to each other to form the battery module. The sub-modules are electrically interconnected by an interconnection arrangement, e.g., by screwing. Thus, the battery module can easily be dismounted, e.g., for service and maintenance, and welding can be applied only for the cell assemblies and is avoided for the entire battery module.

Optionally, the at least two ribs of each one of the cell carriers are arranged so that the first plurality of cell retainers of said cell carriers is meanderingly arranged between said at least two ribs. Thus, in addition to the ribs being arranged in a meandering manner, the first plurality of cell retainers is accommodated by the cell carrier in a meandering manner between the at least two mentoring ribs. This may be provided by the ribs having an essentially equal or periodically changing width. This enables an efficient arrangement of the first plurality of cell retainers.

Optionally, the at least two ribs of each one of the cell carriers are arranged so that the second plurality of cell retainers of said cell carriers is meanderingly arranged between one of said at least two ribs and the meandering rib of an adjacently arranged cell carrier. In addition to the ribs being arranged in a meandering manner, the second plurality of cell retainers is accommodated by one of the cell carriers between one of the at least two ribs and a meandering rib of an adjacently arranged cell carrier in a meandering manner. Additionally or alternatively, the at least two ribs of each one of the cell carriers are arranged so that the second plurality of cell retainers of said cell carriers is meanderingly arranged oppositely to the first plurality of cell retainers and separated therefrom, i.e., from the first plurality of cell retainers, by one of the at least two meandering ribs. I.e., the second plurality of cell retainers is accommodated by the cell carrier so that said meandering rib separates the first plurality of cell retainers and the second plurality of cell retainers. This enables an efficient arrangement of the second plurality of cell retainers.

Optionally, the plurality of battery cells is arranged in a hexagonal pattern and/or each of the first and second plurality of cell retainers is arranged in a meandering row so that a plurality of adjacently arranged rows form a hexagonal arrangement of cell retainers. The hexagonal pattern can also be called a honeycomb pattern. The hexagonal pattern means that cell retainers are surrounded in a regular pattern by six neighboring cell retainers of the cell carriers and/or of the battery module. The arrangement of the battery cell retainers in a hexagonal pattern allows a particularly space-saving construction of the battery module and an efficient packing of cylindrical battery cells in the battery module.

Optionally, each of the cell carriers is stackable and the battery module is built from stacked cell carriers. I.e., the cell carriers are shaped and/or adapted to be arranged next to each other without leaving major construction space empty. For example, an effective arrangement of cell retainers can imply that neighboring cell carriers can be arranged next to each other in a stacked manner without leaving a gap between battery cells that are retained within the cell retainers. Optionally, the cell carriers comprise mechanical connection members that are adapted to guide neighboring cell carriers during manufacturing so that the neighboring cell carriers are effectively arranged next to each other and adapted to mechanically hold the neighboring cell carriers next to each other in the mounted state. This enables that the adjacently arranged cell carriers can be arranged adjacent to each other in a stacked manner to provide a modular construction of the battery module.

Optionally, each of the battery cells is cylindrically shaped, and/or, each of the cell retainers is at least party cylindrically shaped and/or comprises a cylindrical through-hole to provide an embodiment that is efficient to manufacture. The cylindrical shape allows an effective and simple arrangement of cylindrically shaped battery cells within the cell retainers. A cylindrical through-hole enables an efficient mounting of the battery cells by insertion of the battery cells into the through-hole at one end of the through-hole, wherein the battery cells are accessible at an opposite end of the through-hole, e.g., to provide electrical connection. Alternatively or additionally, the cell-retainers can have the shape of a cylinder segment and/or adjacent cell retainers can be connected with each other, in particular adjacent cell retainers within one row can be connected with each other. Optionally, each of the retainers comprises a ring-shaped projection to prevent the battery cells held therein from moving.

Optionally, each of the cell carriers comprises an even number of cell retainers. This enables an effective arrangement of battery cells within the battery module as a plurality of cell carriers are arranged adjacent to each other. With an even number of cell retainers comprised by each of the cell carriers, construction space within a battery module can be efficiently used to arrange the battery cells. The even number of cell retainers allows a particular efficient manufacture of a plurality of cell assemblies as busbars to electrically interconnect the battery cells retained in the cell retainers are identical for each of the cell assemblies.

Optionally, each of the cell carriers comprises 10, 14 or 18 cell retainers. Thus, each cell carrier can retain 10, 14 or 18 battery cells to balance the requirements of an efficient packing and manufacture, and of making use of the modular construction of the battery module.

Optionally, two or more of the battery cells retained in one of the cell carriers are electrically interconnected by a busbar; wherein the busbar is welded to electrically interconnect said battery cells. Optionally, each of the battery cells retained in one of the cell carriers are electrically interconnected by the same busbar. This embodiment enables that an electrical interconnection between the battery cells is also modularized by providing cell assemblies with an electrical interconnection between battery cells being retained within one of the cell carriers, each. The busbars of a plurality of such cell assemblies are electrically interconnectable to provide an electrical interconnection between the battery cells of the battery module that are retained in different cell carriers.

Optionally, the battery module comprises an adhesive to fixate the battery cells within the cell retainers to provide an efficient and cost-effective possibility to additionally support retaining the battery cells within the retainers.

According to another aspect of the present disclosure, a battery pack is provided, comprising a plurality of battery modules as described above. In other words, the battery pack comprises a battery module with at least two cell carriers being arranged adjacent to each other and comprising a first plurality of cell retainers and a second plurality of cell retainers. Each of the cell retainers is adapted for holding one of the battery cells in a form locking manner; wherein the plurality of battery cells is arranged in the cell retainers. Each of the cell carriers comprises at least two meandering ribs being spaced apart from each other; and wherein the first plurality of cell retainers of one of the cell carriers is arranged between the at least two meandering ribs of said cell carrier, and the second plurality of cell retainers of said cell carrier is arranged between one of the at least two meandering ribs and a meandering rib of an adjacently arranged cell carrier. The modular and efficiently manufacturable battery module makes the battery pack also efficiently manufacturable. The battery pack and/or the battery modules of the battery pack can comprise any of the above-mentioned optional features to achieve any of the above-mentioned technical effect.

Yet another aspect of the present disclosure refers to an electric vehicle comprising at least one battery module as described above and/or at least one battery pack as described above. The modular and efficiently manufacturable battery module makes the battery pack and thus the vehicle also efficiently manufacturable. The electrical vehicle and/or the battery modules mounted therein can comprise any of the above-mentioned optional features to achieve any of the above-mentioned technical effect.

Yet another aspect of the present disclosure refers to a cell carrier, comprising: a first plurality of cell retainers and a second plurality of cell retainers, wherein each of the cell retainers is adapted for holding a battery cell in a form locking manner; at least two meandering ribs being spaced apart from each other; wherein the first plurality of cell retainers the cell carrier is arranged between the at least two meandering ribs of said cell carrier, and the second plurality of cell retainers of said cell carrier is arranged oppositely to the first plurality of cell retainers and separated therefrom by one of the at least two meandering ribs. The cell carrier can be adapted so that it comprises the above-mentioned optional features, in particular regarding features of the cell carrier, the meandering ribs, first plurality of cell retainers and/or the second plurality of cell retainers.

Yet another aspect of the present disclosure refers to a cell assembly, comprising: the cell carrier; a plurality of battery cells; and a busbar; wherein the plurality of battery cells is arranged in the cell retainers; and the plurality of cells is electrically interconnected by the busbar. The cell assemblies are smaller in size than the entire battery module. Thus, the cell assembly is efficient to handle and only small manufacturing sites are needed. The cell assemblies are modular in size as described with reference to the cell carrier, easy to handle and thus assembly tolerances can be reduced compared to the case that all the battery cells of the entire battery module need to be equipped with a current collector structure in the same manufacturing site, e.g., by laser welding. The modular design enables that a smaller number of battery cells corresponding to the number of battery cells in a cell carrier can be electrically interconnected by the busbar. A plurality of cell assemblies can be arranged adjacent to each other to form the battery module. To manufacture the entire battery module the cell assemblies are electrically interconnected by an interconnection arrangement, e.g., by screwing. Thus, the battery module can easily be dismounted, e.g., for service and maintenance, and welding can be applied only for the cell assemblies and is avoided for the entire battery module. The cell assembly can be adapted so that it comprises the above-mentioned optional features, in particular regarding features of the cell carrier, the meandering ribs, first plurality of cell retainers and/or the second plurality of cell retainers.

### Specific Embodiments

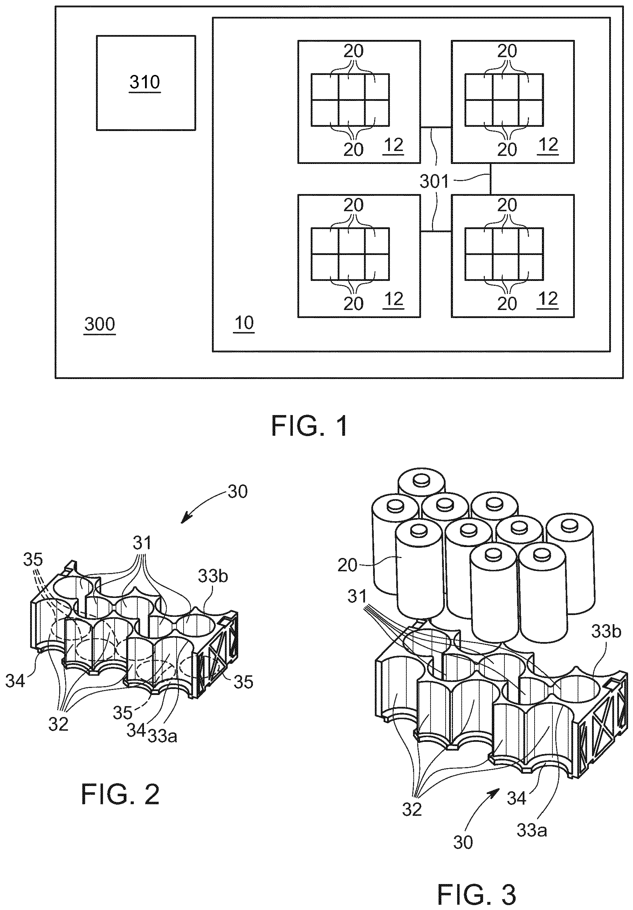

Fig. 1 illustrates a schematic view of an electric vehicle 300 according to an embodiment of the invention. The electric vehicle 300 is propelled by an electric motor 310, using energy stored in rechargeable batteries arranged in a battery pack 10. The battery pack 10 is a set of any number of battery modules 12. Rechargeable batteries are used as a battery module 12 formed of a plurality of secondary battery cells 20. Components of the battery pack 10 include the individual battery modules 12, and interconnects 301, which provide electrical conductivity between battery modules 12. Each of the battery modules 12 comprises battery cells 20.

Fig. 2 illustrates a perspective view of a cell carrier 30 according to an embodiment of the invention.

The cell carrier 30 comprises two meandering ribs 33a, 33b being spaced apart from each other. The cell carriers 30 and thus the meandering ribs 33a, 33b are made of a polymer.

The cell carrier 30 comprises a first plurality of cell retainers 31 and a second plurality of cell retainers 32, wherein each of the cell retainers 31, 32 is adapted for holding a battery cell 20 in a form locking manner. Each of the plurality of cell retainers 31, 32 comprises five cell retainers 31, 32.

The meandering ribs 33a, 33b delimit the cell retainers 31, 32, i.e., the surface of the cell retainers 31, 32 is formed by the meandering ribs 33a, 33b. The meandering ribs 33a, 33b provide the retainers 31, 32 in the form cavities for accommodating battery cells 20.

The first plurality of cell retainers 31 of the cell carrier 30 is arranged between the two meandering ribs 33a, 33b. The two meandering ribs 33a, 33b are arranged and shaped so that the first plurality of cell retainers 31 is meanderingly arranged between the two ribs 33a, 33b. The first plurality of cell retainers 31 is arranged in a first meandering row.

The two ribs 33a, 33b basically extends in a principal extension plane of the respective rib 33a, 33b, each, wherein the meandering, i.e., undulating, ribs 33a, 33b alternatingly extends to either of the two opposite sides with respect the principal extension plane. Therein, each of the two meandering ribs 33a, 33b has a width that periodically changes along the ribs 33a, 33b to form the cell retainers 31, 32 in a meandering, undulating manner.

The second plurality of cell retainers 32 is arranged oppositely to the first plurality of cell retainers 31 and separated therefrom by one of the at least two meandering ribs 33a. I.e., the second plurality of cell retainers 32 is separated from the first plurality of cell retainers 31 by the first meandering rib 33a. Thus, the second plurality of cell retainers 32 is arranged in a second meandering row which is separated from the first meandering row by the first meandering rib 33a.

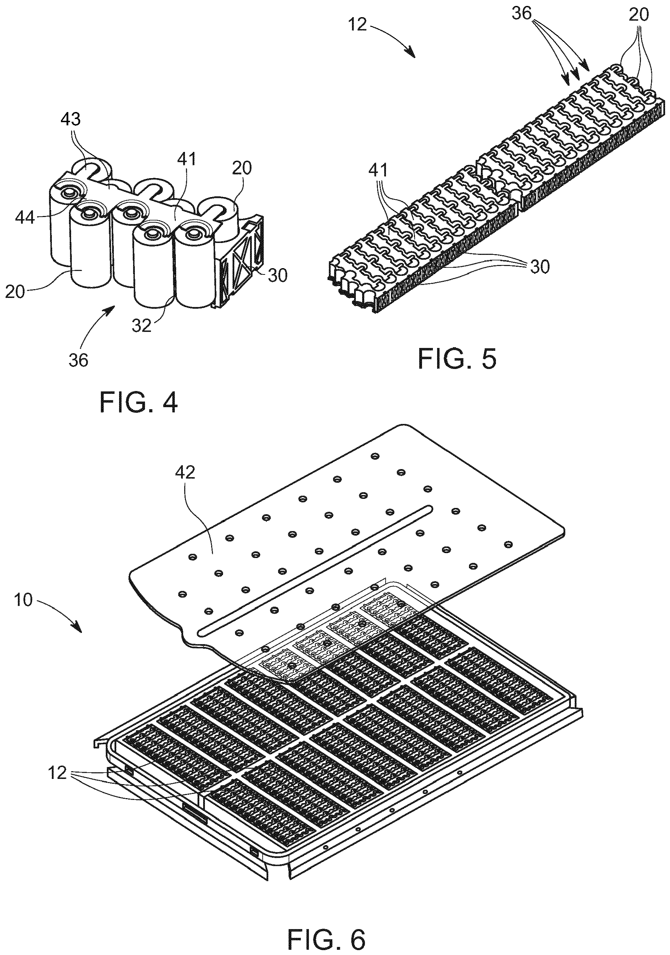

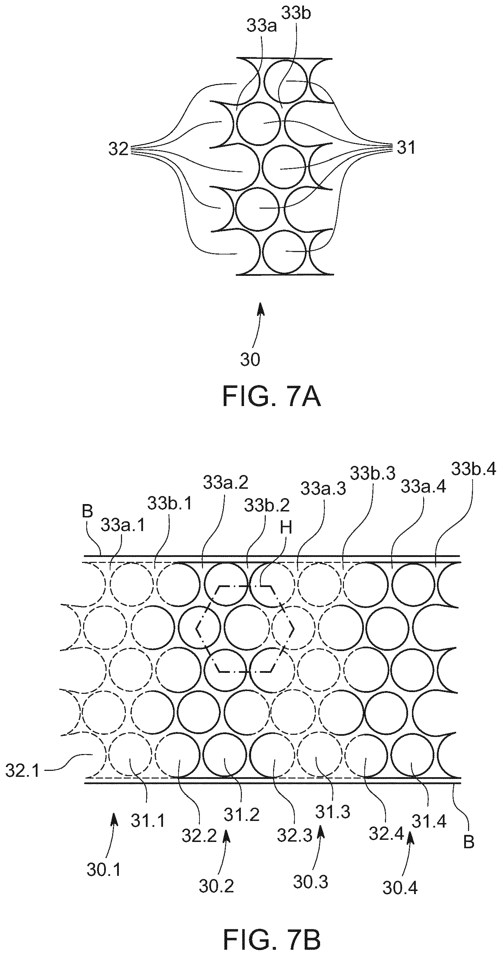

Each of the first and second plurality of cell retainers 31, 32 is arranged in a meandering row so that a plurality of adjacently arranged rows form a hexagonal arrangement of cell retainers 31, 32 as also illustrated in Fig. 5 and 6 and described in detail with reference to Fig. 7. Thus, the cell retainers 31, 32 are arranged in a hexagonal pattern.

Each of the cell retainers 31, 32 is cylindrically shaped and comprises a cylindrical through-hole 35 (as indicated with dashed lines), or a section thereof. Specifically, each of the first plurality of cell retainers 31 comprises a through-hole 35, and each of the second plurality of cell retainers 32 is formed by a cylinder segment and comprises a corresponding opening in form of a section of a through-hole 35, which is in also referred to as a through hole 35. Each of the retainers 31, 32 comprises a projection 34 to prevent the battery cells 20 held therein from moving, in particular along their cylindrical axes. Each of the projections 34 is ring-shaped to effectively reduce the diameter of the respective through-hole 35 and/or the cell retainers 31, 32. Specifically, each of the projections 34 of the first plurality of cell retainers 31 is o-ring-shaped (not shown) and each of the projections 34 of the second plurality of cell retainers 32 is shaped as a segment of a ring.

The first plurality of cell retainers 31 comprises a plurality of connected cell retainers 31. I.e., the cell carrier 30 is shaped so that each of the first plurality of cell retainers 31 is shaped as a cylinder segment, wherein a circumferential section of each of the cell retainer 31 is open connect to an adjacent cell retainer 31 of the first plurality of cell retainers 31. Thus, the first plurality of cell retainers 31 comprises a meandering row of interconnected cell retainers 31.

Similarly, the second plurality of cell retainers 32 comprises a plurality of connected cell retainers 32. I.e., the cell carrier 30 is shaped so that each of the second plurality of cell retainers 32 is shaped as a cylinder segment, wherein a circumferential section of each of the cell retainers 32 is open connect to an adjacent cell retainer 32 of the second plurality of cell retainers 32. Thus, the second plurality of cell retainers 32 comprises a meandering row of interconnected cell retainers 32.

The cell carrier 30 is stackable so that a battery module 12 can be built from stacked cell carriers 30.

Each of the cell carriers 30 comprises an even number of cell retainers 31, 32, i.e., the cell carrier 30 comprises an odd number of first cell retainers 31 and an odd number of second cell retainers 32. In total, the cell carrier 30 comprises ten cell retainers 31, 32.

Fig. 3 illustrates a perspective view of a cell carrier 30 and a plurality of battery cells 20 according to an embodiment of the invention. The cell carrier 30 is shown in Fig. 2 and described with reference thereto.

Each of the battery cells 20 has a cylindrical shape. The shape of the battery cells 20 match the shape of the cell retainers 31, 32 in the sense that the battery cells 20 can be held fixed by and within the cell retainers 31, 32. The battery cells 20 can be mounted to the cell carrier 30 by inserting them along their respective cylinder axis into the cell retainers 31, 32. Each of the cell retainers 31, 32 comprises a projection 34 that is dimensioned so that the battery cells 20 are prevented from moving through the through-holes 35 of the cell retainers 31, 32. To improve fasting the battery cells 20 within the cell retainers 31, 32, the battery module 12 comprises an adhesive. The adhesive can be applied to the surfaces that delimit the cell retainers 31, 32 and/or to the projections 34.

The diameter of the battery cells 20 and/or of the cell retainers 31, 32 is at least 30 mm, optionally, at least 32 mm.

Fig. 4 illustrates a perspective view of a cell assembly 36 according to an embodiment of the invention.

The cell assembly 36 comprises the cell carrier 30 as shown in Figs. 2 and 3 and described with reference thereto, the plurality of battery cells 20 as shown in Fig. 3 and described with reference thereto, and a busbar 41.

The plurality of battery cells 20 is arranged in the cell retainer 31, 32 of the cell carrier 30 as described with reference to Fig. 3.

The plurality of battery cells 20 is electrically interconnected by the busbar 41 welded to the battery cells 20 to electrically interconnect the battery cells 20 with each other.

The busbar 41 comprises a plurality of connection members 43, each of which is adapted and arranged to electrically connect to a terminal of one of the battery cells 20 retained by the first plurality of cell retainers 31. The connection members 43 are arranged in a meandering row corresponding to the meandering row in which the first plurality of cell retainers 31 is arranged.

The busbar 41 comprises a covering section 44 adapted and arranged to connect to a plurality of battery cell casings, also called housing, of the battery cells 20. The covering section 44 is arranged in a meandering manner so as to correspond to the meandering row in which the second plurality of cell retainers 32 is arranged.

In this example, a 5p connection is designed as shown, wherein the battery cells 20 are placed into the cell carrier 30 and the busbar 41 is welded with its covering section 44 on a negative potential on the shoulder of one row, i.e., on the battery cells 20 retained by the second plurality of cell retainers 32, and with the connection members 43 on the positive terminal on another row, i.e., on the battery cells 20 retained by the first plurality of cell retainers 31.

A plurality of cell assemblies as shown in Fig. 4 can be stacked together to form a battery module 12 as shown in Fig. 5 and described with reference thereto.

Fig. 5 illustrates a perspective view of a battery module 12 according to an embodiment of the invention.

The battery module 12 comprises a plurality of cell assemblies 36 as shown in Fig. 4 and described with reference thereto and thus comprises a plurality of cell carriers 30 as shown in Figs. 2 to 3 and as explained with reference thereto.

The cell assemblies 36 and thus the cell carriers 30 are arranged side-by-side in a stacked manner so that the battery module 12 is built from stacked cell assemblies 36. The plurality of battery cells 20 is arranged in a hexagonal pattern.

The battery module 12 can be assembled as follows. The plurality of battery cells 20 and the plurality of cell carriers 30 is provided. The plurality of battery cells 20 is arranged in the cell retainers 31, 32 of one of the cell carriers 30. The busbar 41 is welded, e.g., by laser welding, to the battery cells 20 as shown in Fig.4 and described with reference thereto. Thus, the cell assemblies 36 are manufactured. The above is performed for the plurality of cell assemblies 36. The plurality of cell assemblies 36 is arranged adjacent to each other, e.g., stacked onto each other to form the battery module 12. To provide an electrical connection between the different cell assemblies 36, the busbars 41 of the plurality of cell assemblies 36 are electrically interconnected by an interconnection arrangement, e.g., by screwing (not shown).

A plurality of battery modules 12 as shown in Fig. 5 arranged together to form a battery pack 10 as shown in Fig. 6.

Fig. 6 illustrates a perspective view of a battery pack according to an embodiment of the invention.

The battery pack 10 comprises a plurality of battery modules 12 as described with reference to Fig. 5. The battery pack 10 comprises a removable cover which provides a removable bottom cover 42 for the battery modules 12.

Fig. 7 illustrates a schematic top view of a plurality of adjacently arranged cell carriers 30 according to the embodiment of Fig. 2. The cell carriers 30 are those as illustrated in Fig. 2 and described in detail with reference thereto. Fig. 7 illustrates the hexagonal arrangement of the first cell retainers 31 and the second cell retainers 32 in which battery cells 20 are to be retained.

For reference, the cell retainer 30 as illustrated in Fig. 2 is illustrated in Fig. 7 (A) in a schematic top view. In this representation, the projections 34 of the cell carrier 30 are not shown for the sake of simplicity.

Fig. 7 (B) illustrates four cell carriers 30.1, 30.2, 30.3, 30.4 arranged adjacent to each other. In this representation, the projections 34 of the cell carriers 30 are not shown for the sake of simplicity. For each of the cell carriers 30.1, 30.2, 30.3, 30.4 only one of the first cell retainers 31.1, 31.2, 31.3, 31.4 and one of the second cell retainers 32.1, 32.2, 32.3, 32.4 is indicated. To distinguish adjacently arranged cell carriers 30.1, 30.2, 30.3, 30.4 from each other, the cell carriers 30.1, 30.2, 30.3, 30.4 are alternatingly indicated with a solid line or with a dashed line.

For example, regarding cell carrier 30.2, each of the first cell retainers 31.2 is indicated by a circle with a solid line and each of the second cell retainers 32.2 is indicated by a circle with a line which is half solid. Still considering the cell carrier 30.2, each of the first cell retainers 31.2 is arranged in a meandering row, and each of the second cell retainers 32.2 is arranged in a meandering row. The first cell retainers 31.2 and the second cell retainers 32.2 are separated from each other by meandering rib 33a.2. The first cell retainers 31.3 and the second cell retainers 32.3 of the adjacent cell carrier 30.3, indicated by dashed lines, are separated from each other by meandering rib 33a.3. The second cell retainers 32.1 and the first cell retainers 31.1 of the adjacent cell carrier 30.1, indicated by dashed lines, are separated from each other by meandering rib 33a.1. The above consideration can be repeated analogously for any of the cell carriers 30.1, 30.2, 30.3, 30.4.

For an illustrative purpose, a boundary B is indicated that represents a section of the exterior contour of the four cell carriers 30.1, 30.2, 30.3, 30.4. The cell retainers 31.1, 31.2, 31.3, 31.4, 32.1, 32.2, 32.3, 32.4 which are not located adjacent to the boundary B of the adjacently arranged cell carriers 30.1, 30.2, 30.3, 30.4 are arranged in a hexagonal pattern, i.e., each of the cell retainers 31.1, 31.2, 31.3, 31.4, 32.1, 32.2, 32.3, 32.4 which are not located adjacent to the boundary B of the adjacently arranged cell carriers 30.1, 30.2, 30.3, 30.4 has six adjacently arranged cell retainers 31.1, 31.2, 31.3, 31.4, 32.1, 32.2, 32.3, 32.4.

A hexagon H is indicated with a dash-dotted line to illustrate the hexagonal pattern in which the cell retainers 31.1, 31.2, 31.3, 31.4, 32.1, 32.2, 32.3, 32.4 are arranged. The hexagon H is not physically present, but is indicated only to illustrate the arrangement of the cell retainers 31.1, 31.2, 31.3, 31.4, 32.1, 32.2, 32.3, 32.4. The hexagon H at this particular position illustrates that the second cell retainer 32.3 of the cell carrier 30.3 and being arranged in the center of the hexagon H has six neighboring cell retainers 31.2, 31.3, 32.3, namely three first cell retainers 31.2 of the adjacently arranged cell carrier 30.2, one first cell retainer 31.3 of said cell retainer 30.3 and two second cell retainers 32.3 of said cell retainer 30.3. The above consideration can be repeated analogously for any of the cell retainers 31.1, 31.2, 31.3, 31.4, 32.1, 32.2, 32.3, 32.4 which are not located adjacent to the boundary B of the adjacently arranged cell carriers 30.1, 30.2, 30.3, 30.4.

Thus, each of the first and second plurality of cell retainers 31.1, 31.2, 31.3, 31.4, 32.1, 32.2, 32.3, 32.4, except the cell retainers 31.1, 31.2, 31.3, 31.4, 32.1, 32.2, 32.3, 32.4 at the boundary B of the cell carriers 30.1, 30.2, 30.3, 30.4, is arranged in a meandering row so that a plurality of adjacently arranged rows form a hexagonal arrangement of cell retainers 31.1, 31.2, 31.3, 31.4, 32.1, 32.2, 32.3, 32.4.

### Reference signs

- 10: battery pack
- 12: battery module
- 20: battery cell
- 30, 30.1, 30.2, 30.3, 30.4: cell carrier
- 31, 31.1, 31.2, 31.3, 31.4: first cell retainer
- 32, 32.1, 32.2, 32.3, 32.4: second cell retainer
- 33a, 33a.1, 33a.2, 33a.3, 33a.4: meandering rib
- 33b, 33b.1, 33b.2, 33b.3, 33b.4: meandering rib
- 34: projection
- 35: through-hole
- 36: cell assembly
- 41: busbar
- 42: bottom cover
- 43: connection member
- 44: covering section

- 300: vehicle
- 301: interconnects
- 310: motor

- B: boundary
- H: hexagon

## Claims

1. A battery module (12), comprising:
- a plurality of battery cells (20), and
- at least two cell carriers (30); wherein
- the at least two cell carriers (30) are arranged adjacent to each other, and
- each of the cell carriers (30) comprises a first plurality of cell retainers (31) and a second plurality of cell retainers (32), wherein each of the cell retainers (31, 32) is adapted for holding one of the battery cells (20) in a form locking manner; wherein
- the plurality of battery cells (20) is arranged in the cell retainers (31, 32); wherein
- each of the cell carriers (30) comprises at least two meandering ribs (33a, 33b) being spaced apart from each other; and wherein
- the first plurality of cell retainers (31) of one of the cell carriers (30) is arranged between the at least two meandering ribs (33a, 33b) of the cell carrier (30), and the second plurality of cell retainers (32) of the cell carrier (30) is arranged between one of the at least two meandering ribs (33a, 33b) and a meandering rib (33a, 33b) of an adjacently arranged cell carrier (30).

2. The battery module (12) according to claim 1; wherein
- the at least two ribs (33a, 33b) of each one of the cell carriers (30) are arranged so that the first plurality of cell retainers (31) of the cell carriers (30) is meanderingly arranged between the at least two ribs (33a, 33b).

3. The battery module (12) according to any one of the preceding claims; wherein
- the at least two ribs (33a 33b) of each one of the cell carriers (30) are arranged so that the second plurality of cell retainers (32) of the cell carriers (30) is meanderingly arranged between one of the at least two ribs (33a, 33b) and the meandering rib (33a, 33b) of an adjacently arranged cell carrier (30), and/or
- the at least two ribs (33a 33b) of each one of the cell carriers (30) are arranged so that the second plurality of cell retainers (32) of the cell carriers (30) is meanderingly arranged oppositely to the first plurality of cell retainers (31) and separated therefrom by one of the at least two meandering ribs (33a, 33b).

4. The battery module (12) according to any one of the preceding claims; wherein
- the plurality of battery cells (20) is arranged in a hexagonal pattern and/or
- each of the first and second plurality of cell retainers (31, 32) is arranged in a meandering row so that a plurality of adjacently arranged rows form a hexagonal arrangement of cell retainers (31, 32).

5. The battery module (12) according to any one of the preceding claims; wherein
- each of the cell carriers (30) is stackable and the battery module (12) is built from stacked cell carriers (30).

6. The battery module (12) according to any one of the preceding claims, wherein
- each of the battery cells (20) is cylindrically shaped; and/or
- each of the cell retainers (31, 32) is at least party cylindrically shaped and/or comprises a cylindrical through-hole (35).

7. The battery module (12) according to claim 6, wherein
- each of the cell retainers (31, 32) comprises a projection (34) to prevent the battery cells (20) held therein from moving.

8. The battery module (12) according to any one of the preceding claims, wherein
- each of the cell carriers (30) comprises an even number of cell retainers (31, 32).

9. The battery module (12) according to claim 8, wherein
- each of the cell carriers (30) comprises ten, fourteen or eighteen cell retainers (31, 32).

10. The battery module (12) according to any one of the preceding claims, wherein
- two or more of the battery cells (20) retained in one of the cell carriers (30) are electrically interconnected by a busbar (41); wherein
- the busbar (41) is welded to electrically interconnect the battery cells (20).

11. The battery module (12) according to any one of the preceding claims, wherein
- the battery module (12) comprises an adhesive to fixate the battery cells (20) within the cell retainers (31, 32).

12. A battery pack (10) comprising a plurality of battery module (12) according to any one of the preceding claims.

13. An electric vehicle (300) comprising the battery module (12) according to any one of the claims 1 to 11 and/or a battery pack (10) as claimed in claim 12.

14. A cell carrier (30), comprising:
- a first plurality of cell retainers (31) and a second plurality of cell retainers (32), wherein each of the cell retainers (31, 32) is adapted for holding a battery cell (20) in a form locking manner;
- at least two meandering ribs (33a, 33b) being spaced apart from each other; wherein
- the first plurality of cell retainers (31) the cell carrier (30) is arranged between the at least two meandering ribs (33a, 33b) of the cell carrier (30), and the second plurality of cell retainers (32) of the cell carrier (30) is arranged oppositely to the first plurality of cell retainers (31) and separated therefrom by one of the at least two meandering ribs (33a, 33b).

15. A cell assembly (36), comprising:
- the cell carrier (30) as claimed in claim 14;
- a plurality of battery cells (20); and
- a busbar (41); wherein
- the plurality of battery cells (20) is arranged in the cell retainers (31, 32); and
- the plurality of battery cells (20) is electrically interconnected by the busbar (41).

## Amended claims

### Amended claims in accordance with Rule 137(2) EPC.

1. A battery module (12), comprising:
- a plurality of battery cells (20), and
- at least two cell carriers (30); wherein
- the at least two cell carriers (30) are arranged adjacent to each other, and
- each of the cell carriers (30) comprises a first plurality of cell retainers (31) and a second plurality of cell retainers (32), wherein each of the cell retainers (31, 32) is adapted for holding one of the battery cells (20) in a form locking manner; wherein
- the plurality of battery cells (20) is arranged in the cell retainers (31, 32); wherein
- each of the cell carriers (30) comprises at least two meandering ribs (33a, 33b) being spaced apart from each other; wherein
- the first plurality of cell retainers (31) of one of the cell carriers (30) is arranged between the at least two meandering ribs (33a, 33b) of the cell carrier (30), and the second plurality of cell retainers (32) of the cell carrier (30) is arranged between one of the at least two meandering ribs (33a, 33b) and a meandering rib (33a, 33b) of an adjacently arranged cell carrier (30), and wherein
each of the cell retainers (31, 32) comprises a projection (34) to prevent the battery cells (20) held therein from moving.

2. The battery module (12) according to claim 1; wherein
- the at least two ribs (33a, 33b) of each one of the cell carriers (30) are arranged so that the first plurality of cell retainers (31) of the cell carriers (30) is meanderingly arranged between the at least two ribs (33a, 33b).

3. The battery module (12) according to any one of the preceding claims; wherein
- the at least two ribs (33a 33b) of each one of the cell carriers (30) are arranged so that the second plurality of cell retainers (32) of the cell carriers (30) is meanderingly arranged between one of the at least two ribs (33a, 33b) and the meandering rib (33a, 33b) of an adjacently arranged cell carrier (30), and/or
- the at least two ribs (33a 33b) of each one of the cell carriers (30) are arranged so that the second plurality of cell retainers (32) of the cell carriers (30) is meanderingly arranged oppositely to the first plurality of cell retainers (31) and separated therefrom by one of the at least two meandering ribs (33a, 33b).

4. The battery module (12) according to any one of the preceding claims; wherein
- the plurality of battery cells (20) is arranged in a hexagonal pattern and/or
- each of the first and second plurality of cell retainers (31, 32) is arranged in a meandering row so that a plurality of adjacently arranged rows form a hexagonal arrangement of cell retainers (31, 32).

5. The battery module (12) according to any one of the preceding claims; wherein
- each of the cell carriers (30) is stackable and the battery module (12) is built from stacked cell carriers (30).

6. The battery module (12) according to any one of the preceding claims, wherein
- each of the battery cells (20) is cylindrically shaped; and/or
- each of the cell retainers (31, 32) is at least party cylindrically shaped and/or comprises a cylindrical through-hole (35).

7. The battery module (12) according to any one of the preceding claims, wherein
- each of the cell carriers (30) comprises an even number of cell retainers (31, 32).

8. The battery module (12) according to claim 7, wherein
- each of the cell carriers (30) comprises ten, fourteen or eighteen cell retainers (31, 32).

9. The battery module (12) according to any one of the preceding claims, wherein
- two or more of the battery cells (20) retained in one of the cell carriers (30) are electrically interconnected by a busbar (41); wherein
- the busbar (41) is welded to electrically interconnect the battery cells (20).

10. The battery module (12) according to any one of the preceding claims, wherein
- the battery module (12) comprises an adhesive to fixate the battery cells (20) within the cell retainers (31, 32).

11. A battery pack (10) comprising a plurality of battery module (12) according to any one of the preceding claims.

12. An electric vehicle (300) comprising the battery module (12) according to any one of the claims 1 to 10 and/or a battery pack (10) as claimed in claim 11.

13. A cell carrier (30), comprising:
- a first plurality of cell retainers (31) and a second plurality of cell retainers (32), wherein each of the cell retainers (31, 32) is adapted for holding a battery cell (20) in a form locking manner;
- at least two meandering ribs (33a, 33b) being spaced apart from each other; wherein
- the first plurality of cell retainers (31) the cell carrier (30) is arranged between the at least two meandering ribs (33a, 33b) of the cell carrier (30), and the second plurality of cell retainers (32) of the cell carrier (30) is arranged oppositely to the first plurality of cell retainers (31) and separated therefrom by one of the at least two meandering ribs (33a, 33b), wherein
each of the cell retainers (31, 32) comprises a projection (34) to prevent the battery cells (20) held therein from moving.

14. A cell assembly (36), comprising:
- the cell carrier (30) as claimed in claim 13;
- a plurality of battery cells (20); and
- a busbar (41); wherein
- the plurality of battery cells (20) is arranged in the cell retainers (31, 32); and
- the plurality of battery cells (20) is electrically interconnected by the busbar (41).
